**Europäisches Patentamt**

(19) **European Patent Office**

**Office européen des brevets**

(11) Veröffentlichungsnummer: **0 065 782**
**B1**

(12) **EUROPÄISCHE PATENTSCHRIFT**

(45) Veröffentlichungstag der Patentschrift:
09.04.86

(21) Anmeldenummer: 82104554.9

(22) Anmeldetag: 25.05.82

(51) Int. Cl.⁴: **A 01 D 46/08,** A 01 D 46/16,
**A 01 D 45/00**

(54) Reihenernteeinheit für Ernteköpfe von Erntemaschinen für in Reihen stehendes Erntegut.

(30) Priorität: 26.05.81 US 266877

(43) Veröffentlichungstag der Anmeldung:
01.12.82 Patentblatt 82/48

(45) Bekanntmachung des Hinweises auf die Patenterteilung:
09.04.86 Patentblatt 86/15

(84) Benannte Vertragsstaaten:
DE FR GB IT

(56) Entgegenhaltungen:
US - A - 2 491 777
US - A - 2 571 224
US - A - 2 660 849
US - A - 2 673 440
US - A - 2 759 316
US - A - 2 903 835
US - A - 3 171 241
US - A - 3 200 573
US - A - 3 483 686
US - A - 3 714 767
US - A - 3 716 976
US - A - 3 734 563
US - A - 4 125 988

(73) Patentinhaber: DEERE & COMPANY, 1 John Deere
Road, Moline Illinois 61265 (US)

(72) Erfinder: Schlueter, Francis Edward, 6666 Northwest
Fifth Street, Des Moines Iowa 50313 (US)

(74) Vertreter: Fricke, Joachim, Dr. et al, Dr. R. Döring, Dr. J.
Fricke, Patentanwälte Josephspitalstrasse 7,
D-8000 München 2 (DE)

## Beschreibung

Die Erfindung betrifft eine Reihenernteeinheit, insb. für Baumwolle, mit den Merkmalen des ersten Teils des Anspruchs 1.

Eine Reihenernteeinheit mit diesen Merkmalen ist aus der US-A 29 03 835 bekannt. Diese bekannte Reihenernteeinheit weist als tragende Teile jeweils eine äußere, in Fahrtrichtung langgestreckte aufrechte Seitenwand auf, die einerseits mit ihrem rückwärtigen Ende an einer gemeinsamen rückwärtigen Rahmenanordnung befestigt und andererseits zusätzlich durch Tragstangen an der Maschine abgefangen ist. An diesen Seitenwandteilen sind alle übrigen Teile der Reihenernteeinheit abgestützt. Dies gilt auch für einen Fördertrog, in dem eine Förderschnecke drehbar gelagert ist, und der nur in seinem vorderen Abschnitt aus geschlossenen Trogabschnitten, im übrigen aber aus einem Stangengitter besteht. Die Seitenwandteile bzw. daran befestigte Teile dienen auch zur Unterstützung von im gegenseitigen Abstand und unter Bildung eines in Fahrtrichtung und nach oben offenen Durchgangs für die in Reihen angeordneten Pflanzen rotierend angetriebenen Bürstenrolleneinheiten, hinter denen jeweils in dem Fördertrog die Förderschnecke angeordnet ist. Die Förderschnecken fördern das von den Bürstenrolleneinheiten abgestreifte Erntegut der Fahrtrichtung entgegen zu einem Abgabebereich in der rückwärtigen Rahmenanordnung. Auch die die Lager für die Bürstenrolleneinheiten und die Förderschnecken tragenden Frontplatten sind jeweils an den Seitenwandteilen befestigt und von diesen getragen. Zwischen den beiden aufrechten Seitenwandteilen wird ein gegenüber dem Pflanzendurchgang breiter und nach vorne und nach oben offener Kanal begrenzt, in dem die Bürstenrolleneinheiten und die Förderschnecken arbeiten.

Der Zugang zu den einzelnen Elementen ist nur von vorne oder von oben her möglich. Trotz der relativ großen Bauhöhe der Seitenwandteile vermögen diese die Reihenernteeinheit nicht von sich aus selbständig zu tragen und zu unterstützen. Vielmehr sind zusätzliche, außerhalb der rückwärtigen Rahmenanordnung angeordnete und an der zugehörigen Maschine verankerte Tragstangen erforderlich. Damit ist die Höhe der Seitenwandteile nicht nur bestimmt, Erntegutverluste zu vermeiden, sondern auch durch ihre Aufgabe wesentlich alle Elemente der Reihenernteeinheit mit zu unterstützen.

Bei der Reihenernteeinheit nach der US-A 41 25 988 ragen die beiden Seitenwandteile so weit nach oben, daß sie durch eine obere, geschlossene Abdeckung zu einem geschlossenen Gesamtgehäuse verbunden sein können. An den vorderen Enden der Seitenwände sind Tastschuhe angeordnet, welche direkt die Bodenkontur abtasten, um so die Höhenlage der Reihenernteeinheit gegenüber dem Boden zu steuern. Ferner weist die bekannte Reihenernteeinheit im vorderen Eintrittsbereich des Pflanzendurchgangs aufeinander zu gerichtete und quer zur Fahrtrichtung sich erstreckende Borstenreihen uf (vgl. auch die US-A 37 34 563, US-A-37 14 767 und US-A-37 16 976).

Es ist Aufgabe der Erfindung eine Reihenernteeinheit mit den Merkmalen des ersten Teils des Anspruchs 1 so weiterzubilden, daß bei zuverlässiger Stabilität der frei auskragenden Reihenernteeinheit die Zugänglichkeit zu den Elementen dieser Einheit wesentlich erleichtert wird und bei geringen Querschnittsabmessungen die Erntegutverluste klein gehalten werden können und das Erntegut aus der Reihenernteeinheit störungsfrei abgefördert werden kann.

Diese Aufgabe wird durch die Merkmale des Anspruchs 1 gelöst.

Hierbei weist die Reihenernteeinheit einen unteren Gehäuseteil und einen oberen Gehäuseteil auf, die leicht lösbar miteinander verbunden sind und unterschiedliche Funktionen haben. Der untere Gehäuseteil weist insgesamt nur eine sehr niedrige Höhe auf. so daß bei Abnahme des oberen Gehäuseteils alle im unteren Gehäuseteil vorhandenen Elemente leicht zugänglich sind und leicht gewartet werden können. Durch die besondere Ausbildung des unteren Gehäuseteils und durch die Ausnutzung der gegenseitigen Querschnittsversetzung von Bürstenrolleneinheit und Förderschnecke wird eine besonders hohe Stabilität und Tragfähigkeit dieses unteren Gehäuseteils erzielt. Dazu trägt wesentlich das jeweils von der rückwärtigen Rahmenanordnung in Fahrtrichtung frei vorspringende untere Bürstenstützprofil bei, das durch seine Verbindung mit em zugehörigen Seitenwandteil eine stabile Trageinheit von hoher Stützkraft bildet. Der obere abnehmbare Gehäuseteil besteht aus leichten abnehmbaren Abdeckungen, welche das Innere der Reihenernteeinheit sowohl nach vorne im Bereich des Pflanzeneintritts als auch nach oben zu begrenzt und gleichzeitig die Seitenwandteile des unteren Gehäuseteils bezüglich der seitlichen Begrenzung der Reihenernteeinheit ergänzen.

Der obere Gehäuseteil braucht wegen der hohen Tragkraft und Stabilität des unteren Gehäuseteils und der zugehörenden Stützprofile zur Stabilität und Trasfähigkeit der Reihenernteeinheit nichts beizutragen. Der obere Gehäuseteil kann also relativ leicht ausgebildet sein und in seinem in Fahrtrichtung weisenden vorderen Bereich nahezu die gesamte Höhe der Reihenernteeinheit und des Pflanzenguteintrittes ausmachen. Zusätzlich Tragstangen oder dgl. sind vollständig entbehrlich. Damit läßt sich die Reihenernteeinheit an der Erntemaschine auch besonders leicht befestigen, da nur noch die rückwärtige Rahmenanordnung an der Erntemaschine befestigt zu werden braucht. Die neue Reihenernteeinheit ist also wesentlich einfacher, wirkungsvoller, wartungs- und bedienungsfreundlicher als die bekannten Anordnungen. Während die für die Stabilität des unteren Gehäuseteils maßgeblichen Elemente der Reihenernteeinheit im rückwärtigen Bereich durch die rückwärtige Rahmenanordnung starr miteinander verbunden sind, wird durch die Merkmale des Anspruchs 2 gewährleistet, daß eine solche starre Verbindung auch im vorderen, in Fahrtrichtung weisenden Bereich vorgesehen ist. Die beiden beiderseits des Pflanzendurchganges liegenden kanalförmigen Versteifungsteile werden in ihrem rückwärtigen Bereich durch die Merkmale des Anspruchs 3 noch einmal zu einer starren Einheit verbunden, wodurch die Stabilität und Steifigkeit der Reihenernteeinheit weiter gefördert wird.

Die Merkmale des Anspruchs 4 führen zu einer besonders günstigen Ausbildung des Bürstenstützprofils unter besonders vorteilhafter Ausnutzung des unter der Bürstenrolleneinheit vorhandenen Raumes der Reihenernteeinheit.

Die Maßnahmen nach Anspruch 5 führen dazu, daß die Rahmenanordnung, die durch die freie Auskragung der Reihenernteeinheit auftretenden Kräfte besonders günstig aufnehmen kann, wobei gleichzeitig eine Begünstigung der Abförderung des geernteten Gutes durch die Förderschnecken erreicht wird. Den leichten und zur Steifigkeit der Reihenernteanordnung nicht beitragenden Abdeckungen wird durch die Merkmale des Anspruchs 6 noch eine zusätzliche vorteilhafte Funktion zugeordnet, wobei ausgenutzt wird, daß die Abdeckungen im vorderen Bereich nahezu über die ganze Höhe des Pflanzeneintritts reichen.

Die Merkmale des Anspruchs 7 führen dazu, daß nicht nur im Eintrittsbereich des Pflanzendurchganges, sondern über dessen ganze Länge im oberen Bereich der Reihenernteeinheit ein Abschließen des Innenraumes der Reihenernteeinheit durch die Borstenreihen sichergestellt wird.

Zur genauen Lagesicherung der Abdeckungen gegenüber dem unteren Gehäuseteil und zur leichten und schnellen Anbringung und Lösung der Abdeckungen dienen die Merkmale des Anspruchs 8.

Die Erfindung wird nachfolgend anhand schematischer Zeichnungen an einem Ausführungsbeispiel näher erläutert.

Es zeigen:

Figur 1 in Seitenansicht eine Erntemaschine mit Erntekopf, an den eine Reihenernteeinheit nach der Erfindung befestigt ist.

Figur 2 im Ausschnitt und im größeren Maßstabe in Seitenansicht den rückwärtigen Bereich der Reihenernteeinheit im Bereich der Anbringungsstelle der Reihenernteeinheit an den Querrahmen des Erntekopfes der Erntemaschine.

Figur 3 eine Draufsicht auf die Reihenernteeinheit ohne Bürstenrolleneinheiten und Förderschnecken und ohne vordere Verkleidung.

Figur 4 eine Seitenansicht der Einheit nach Fig. 3.

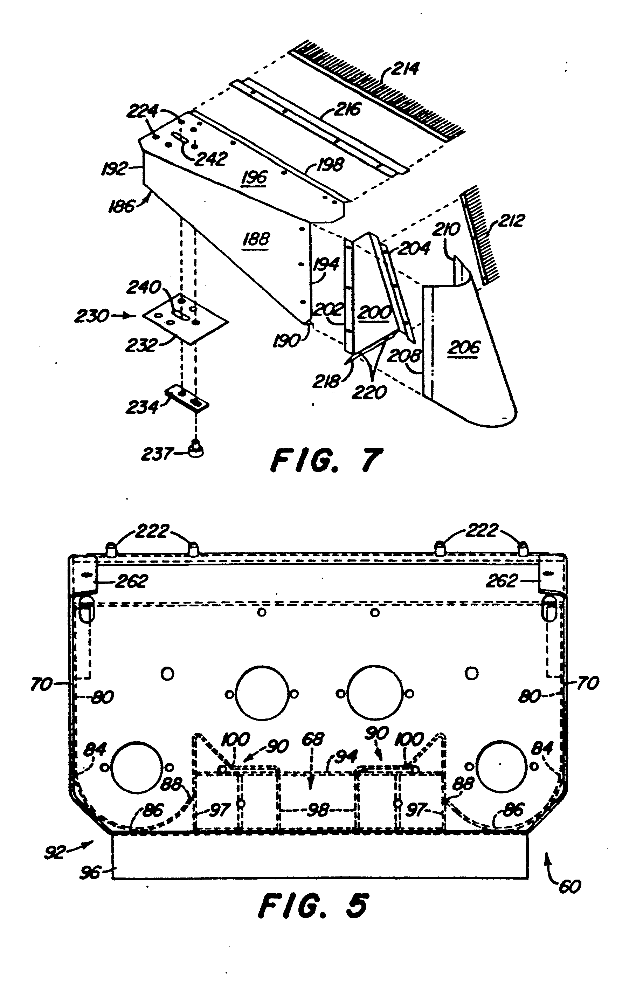

Figur 5 eine rückwärtige Ansicht der Anordnung nach Figur 3 und 4.

Figur 6 in perspektivischer und auseinandergezogender Darstellung die neue Reihenernteeinheit.

Figur 7 in perspektivischer und auseinandergezogender Darstellung eine der beiden Abdeckungen des oberen Gehäuseteils der Reihenernteeinheit.

Figur 8 im Ausschnitt und im senkrechten Längsschnitt die Verbindungs- und Verriegelungsstelle zwischen oberem Gehäuseteil und unterem Gehäuseteil und

Figur 9 in Draufsicht und im Ausschnitt den rückwärtigen Bereich der Reihenernteeinheit bei abgenommener Abdeckung.

In den Figuren ist die Reihenernteeinheit in einer Ausführungsform dargestellt, wie sie zur Anbringung an den Erntekopf von Baumwollerntemaschinen besonders geeignet ist.

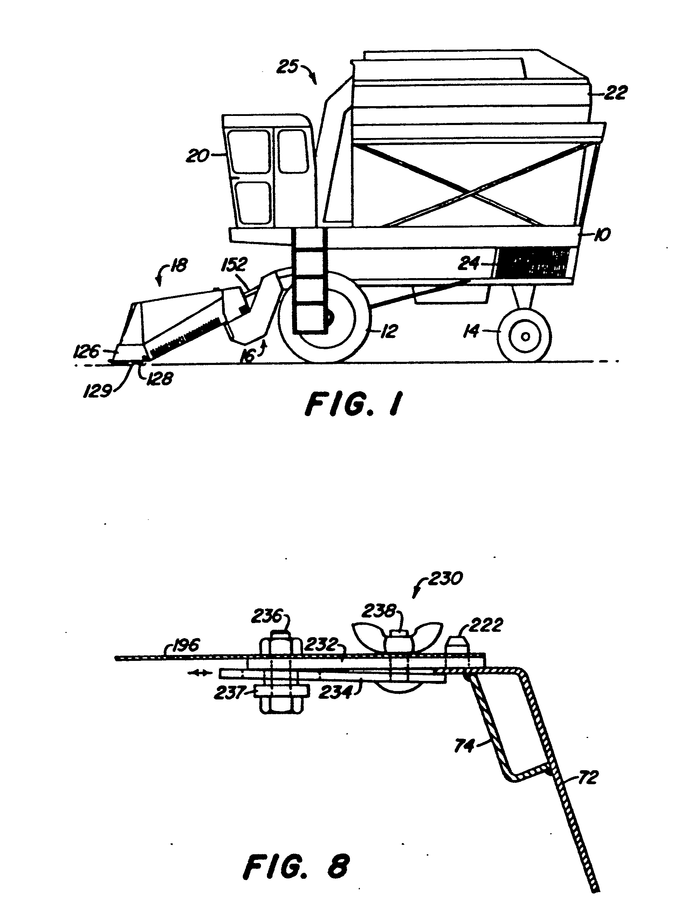

Die Erntemaschine nach Fig. 1 umfaßt einen Fahrgestellrahmen 10 mit vorderen Antriebsrädern 12 und rückwärtigen Lenkrädems 14. Ein sich in Querrichtung erstreckender Hauptrahmen 16 für einen Querförderer wird am vorderen Ende des Fahrgestells 10 unterstützt und bildet den Erntekopf der Maschine. An diesem Hauptrahmen 16 sind mehrere Reihenernteeinheiten 18 im gegenseitigen Querabstand oberhalb des Bodens abgestützt. Eine Fahrerkabine 20 ist am vorderen Bereich des Fahrgestellrahmens 10 abgestützt. Hinter dieser ist eine das Erntegut aufnehmende Sammeleinrichtung 22 vorgesehen. Eine Antriebsmaschine 24 dient zum Anrieb der Antriebsräder 12 und der Elemente der Reihenernteeinheiten 18 sowie eines das Erntegut nach oben fördernden Förderers 25, welcher den Erntekopf mit dem Sammelbehälter der Maschine verbindet. Der Erntekopf kann aber auch an einer durch eine Zugmaschine nachgeschleppten Erntemaschine vorgesehen sein. Die abnehmbaren Reihenernteeinheiten können auch an anders ausgebildeten Erntköpfen angebracht werden.

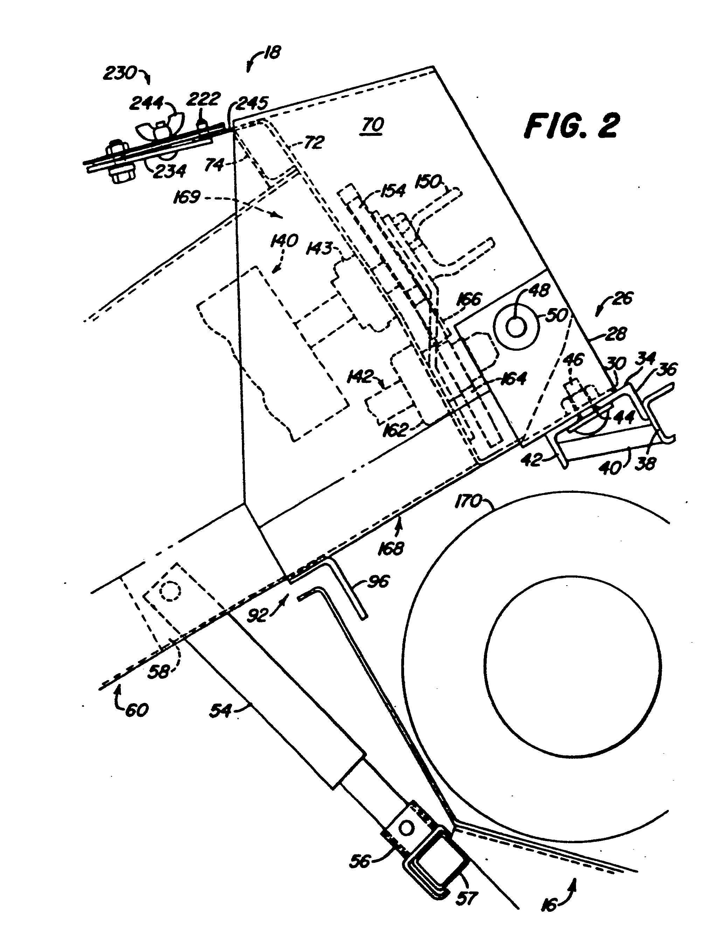

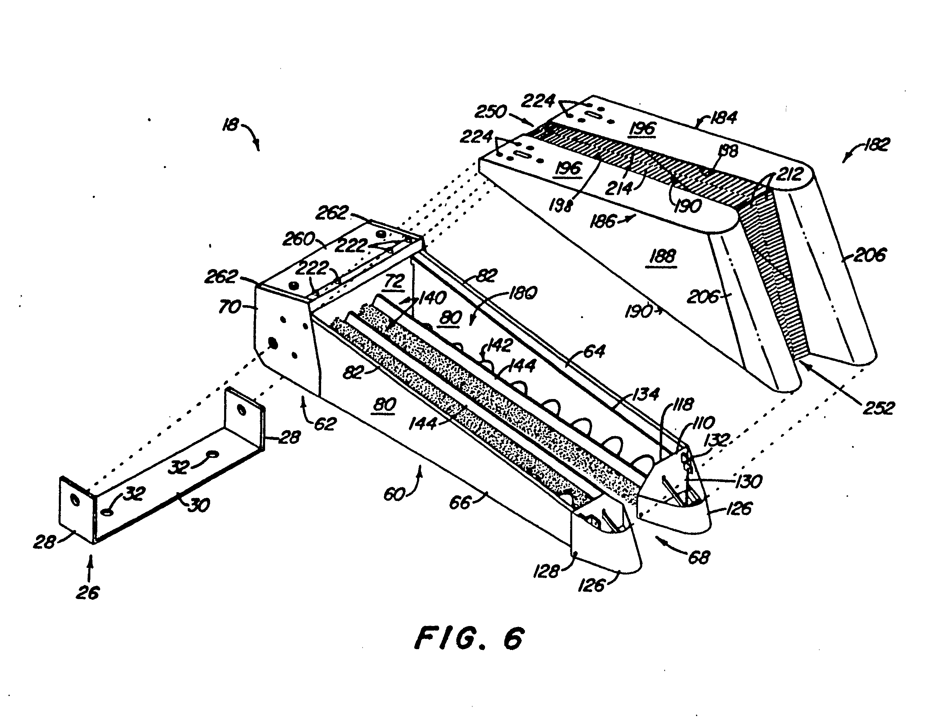

Jede Reihenernteeinheit 18 ist in der bevorzugten Ausführungsform nach Fig. 2 und 6 an dem Hauptrahmen 16 mit Hilfe einer Halterung 26 in Querrichtung einstellbar befestigt. Die Halterung umfaßt seitliche aufrechte Platten 28, die im gegenseitigen Abstand durch eine untere Verbindungsplatte 30 gehalten sind, welche ihrerseits Verbindungsöffnungen 32 aufweist.

Ein nach unten offener, U-förmiger Querträger 34 ist mittels seines rückwärtigen Schenkels 36 an einem Hohlprofil 38 festgeschweißt und durch an dem vorderen Schenkel 42 angreifende Aussteifungen 40 verstärkt. Im gegenseitigen Abstand angeordnete Bohrungen 44 dienen zum Durchgreifen von Befestigungsschrauben 46, mittels denen die Halterung 26 am Hauptrahmen 16 festgeschraubt werden kann. Die Reihenernteeinheit ist mit Hilfe der Halterung 26 zwischen Seitenplatten 28 um die Schwenkzapfen 48 schwenkbar, die durch Abstandselemente am unteren rückwärtigen Bereich der Reihenernteeinheit voresehen sind. Zum Verschwenken dient ein hydraulischer Zylinder 54, der mit seiner Kolbenstange einen unteren Halter 56 aufweist, der sich auf einem hohlen Querträger 57 abstützt. Am anderen Ende ist der Zylinder 54 an einem Halter 58 angelenkt. Durch Ein- und Ausfahren des Zylinders 54 läßt sich die Reihenernteeinheit 18 um die Achsen der Schwenkzapfen 48 schwenken, wodurch sich der vordere Bereich der Reihenernteinheit hebt oder senkt.

Die Reihenernteeinheit weist beiderseits eines Pflanzendurchganges 68 nach Figurenj 3 bis 6 einen unteren Gehäuseteil 60 auf, der von einer rückwärtigen Rahmenanordnung 62 ausgeht. Der untere Gehäuseteil 60 weist rechtsseitige und linksseitige untere Stützeinrichtungen 64 und 66 auf, die sich von der rückwärtigen Rahmenanordnung 62 frei auskragend nach vorne erstrecken. Die beiden Stützeinrichtungen 64, 66 begrenzen zwischen sich den Pflanzendurchgang 68. Der hydraulische Zylinde 54 greift an eine der beiden Stützeinrichtungen an, und zwar ein wenig vor der rückwärtigen Rahmenanordnung 62.

Die rückwärtige Rahmenanordnung 62 weist im Querabstand angeordnete Seitenwände 70 auf, die durch eine rückwärtige aufrechte Querwand 72 miteinander verbunden sind. Am oberen Ende der Querwand 72 ist ein Winkeleisen 74 festgeschweißt. Die Seitenwände weisen bei 76 Flansche auf, um der Rahmenanordnung zusätzliche Festigkeit und Steifigkeit zu geben.

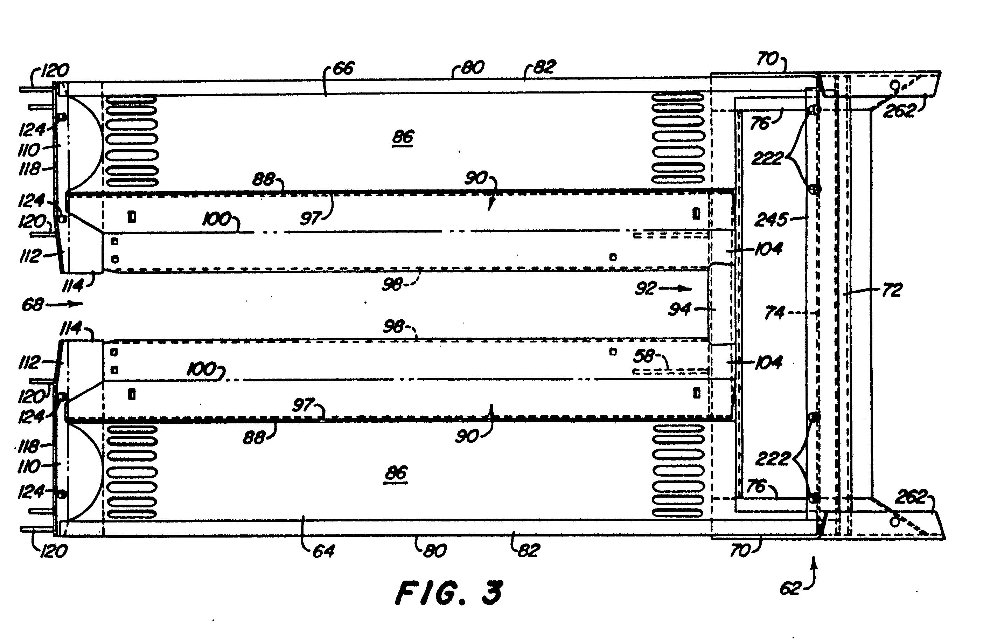

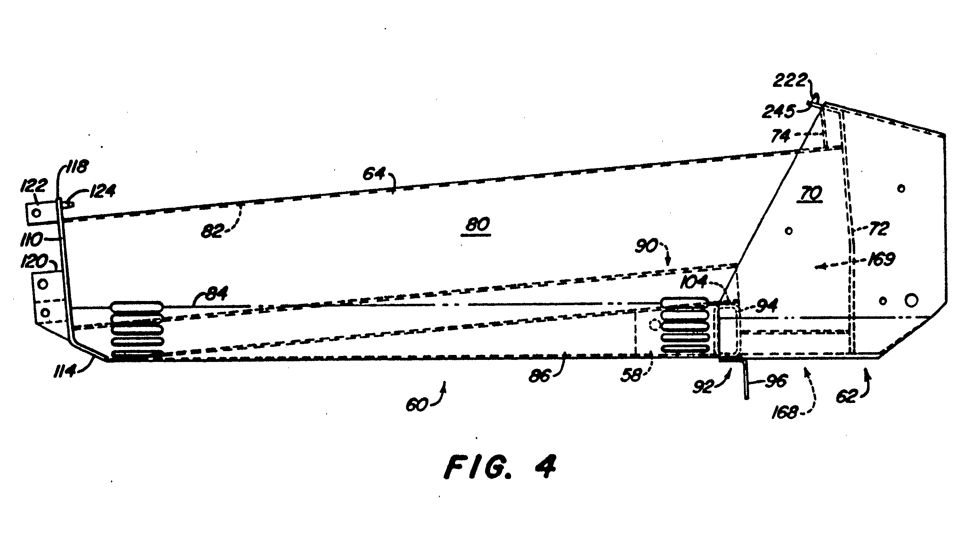

Die Stützeinrichtungen 64 und 66 weisen von der Rahmenanordnung in Fahrtrichtung frei vorspringende aufrechte Seitenwandteile 80 auf, die von der Querwand 72 ausgehen. Jeder Seitenwandteil 80 liegt an der Innenseite der zugehörigen Seitenwnd 70 der Rahmenanordnung 62 an und ist damit durch Schweißen oder dgl. befestigt. An der oberen Kante endet der Seitenwandteil 80 in einen nach innen gerichteten Flansch 82. An der Stelle 84 ist der Seitenwandteil nach innen gekrümmt und bildet einen nach oben offenen Förderdruck 86 von im wesentilchen halbkreisförmigem Querschnitt, der an einer inneren Kante 88 endet. Die Teile 84 bis 88 bilden einen kanalförmigen Versteifungsteil, der mit dem Seitenwandteil 80 über dessen ganze Länge starr verbunden ist. Dieser kanalförmige Versteifungsteil ist wiederum über die ganze Länge der Kante 88 mit einem von der rückwärtigen Rahmenanordnung 62 in Fahrtrichtung frei vorspringenden unteren Bürstenstützprofil 90 starr verbunden. Die rückwärtigen Enden der beiden kanalförmigen Versteifungsteile 84 bis 88 und der beiden Bürstenstützprofile 90 der Reihenernteeinheit sind durch eine Queraussteifung 92 starr miteinander verbunden, wie aus den Figuren 3 und 4 hervorgeht. Die Queraussteifung 92 umfaßt einen rohrförmigen Querträger 94 und ein an dessen Boden angeshweißtes Winkeleisen 96. Der Querträger 94 erstreckt sich zwischen den jeweils äußeren Seitenwänden 97 der beiden Bürstenstützprofile 90. Diese weisen jeweils eine den Pflanzendurchgang 68 in dessen unterem Bereich begrenzende innere aufrechte Seitenwand auf, die mit der zugehörenden äußeren Seitenwand 97 über einen der Bürstenrolleneinheite 140 angepaßten oberen Verbindungssteg starr verbunden sind, der eine sich parallel zum Pflanzendurchgang erstreckende Biegezone 100 aufweist. Die jeweils äußeren Seitenwände 97 ergänzen die Fördertröge, in denen jeweils eine Förderschnecke 142 drehbar gelagert ist. Die rückwärtige Kante 104 des Bürstenstützprofils 90 ist an der Oberseite des rohrförmigen Querträgers 94 festgeschweißt. Der Halter 58 für den Zylinder 54 ist an der Vorderseite dieses Querträgers angeschweißt sowie an den Boden des Bürstenstützprofils nahe der Biegezone 100.

Die in Fahrtrichtung weisenden Enden jedes kanalförmigen Versteifungsteils 84 bis 88 ist mit dem freien Ende des unmittelbar benachbarten aufrechten Seitenwandteils 80 und mit dem freien Ende des unmittelbar benachbarten Bürstenstützprofils 90 durch eine die Lager für die Bürstenrolleneinheit 140 und die Förderschnecke 142 aufnehmende Stirnplatte 110 starr verbunden. Die Stirnplatte 110 weist einen aufrechten Bereich 112 und einen unteren nach unten und rückwärts gebogenen Bereich 114 auf, dessen rückwärtige Kante an die vordere Kante des Fördertroges und des Bürstenstützprofils 90 festgeschweißt ist. Die obere Kante 118 der Stirnplatte 110 verläuft im wesentlichen horizontal und erstreckt sich von der oberen Kante der Stirnseite des benachbarten Seitenwandabschnittes 80 nach innen. An der Stirnplatte 110 sind Halter 120 zur Befestigung unterer Pflanzenzusammenführungsteile 126 vorgesehen. Weiterhin ist ein Schwenkzapfenhalter 122 für Höhentaster vorgesehen. Von der Stirnplatte nach hinten ragen Lagebestimmungs- und Stützvorsprünge 124. Die Pflanzenzusammenführungsteile 126 nach Fig. 6 sind durch Stifte 128 schwenkbar gelagert, so daß diese der Bodenkontur folgen können. Nach Fig. 1 kann ein Schuh 129 am Boden der Zusammenführungsteile 126 vorgesehen und über eine Fühlerstange 130 mit einem schwenkbaren Höhenfühler 132 verbunden sein. Der rückwärtige Teil des schwenkbaren Höhenfühlers 132 ist mit einer weiteren Fühlerstange 134 verbunden, die sich nach rückwärts durch die Sammelkammer nahe dem Seitenwandteil 80 zu einem nicht dargestellten Steuerventil für den hydraulischen Zylinder 54 erstreckt, um automatisch die Höhe der Reihenernteeinheit in Abhängigkeit von der Bewegung des Schuhes 129 zu steuern.

Jeder der beiden Stützeinrichtungen 64 und 66 unterstützt seine Bürstenrolleneinheit 140 und eine Förderschnecke 142. Die Bürstenrolleneinheit 140 ist in einem rückwärtigen Lager 143 in der Querwand 72 sowie durch ein in Querrichtung einstellbares vorderes Lager (nicht gezeigt) gelagert. Die Bürstenrolleneinheit 140 besteht aus einer flexiblen Abstreifrolle 144, an der durch Halter 145 abwechselnd Gummischürzen 147 und Nylonbürsten 149 befestigt sind.Der Abstand zwischen den flexiblen Abstreifrollen 144 ist auf die entsprechende Pflanzengröße und die anzutreffenden Bedingungen durch Verstellung des vorderen Lagers einstellbar.

Eine der Bürstenrolleneinheiten 140 ist über eine Universalverbindung 150 nach Fig. 2 mit einer Antriebswelle 152 verbunden, die mit einer üblichen Antriebsanordnung am Hauptrahmen 16 in Verbindung steht. Ein Antriebszahnrad 154 ist drehfest mit der ersten Bürstenrolleneinheit 140 verbunden und steht in Eingriff mit fest mit der zweiten Bürstenrolleneinheit 140 verbunden ist derart, daß die beiden Bürstenrolleneinheiten gegenläufig rotierend angetrieben werden können. Die Nylonbürsten 149 und die Gummischürzen 147 können in jeder Bürstenrolleneinheit 140 umgedreht montiert werden, um so ihre Lebensdauer insgesamt zu verlängern.

Jede Förderschnecke 142 ist konzentrisch zu dem korrespondierenden Fördertrog durch ein nicht gezeigtes vorderes Lager in der vorderen Stirnplatte 110 und durchein rückwärtiges Lager 162 in der Querwand 72 gelagert. Ein mit der Förderschnecke verbundenes Antriebszahnrad 164 steht antriebsmäßig mit dem Zahnrad 154 über ein leer umlaufendes Zahnrad 166 in Eingriff. Eine obere Abdeckung 260 nach Fig. 6 ist an den Flanschen 262 festgeschraubt und deckt den Abschnitt oberhalb der Antriebszahnräder in der rückwärtigen Rahmenanordnung 62 ab.

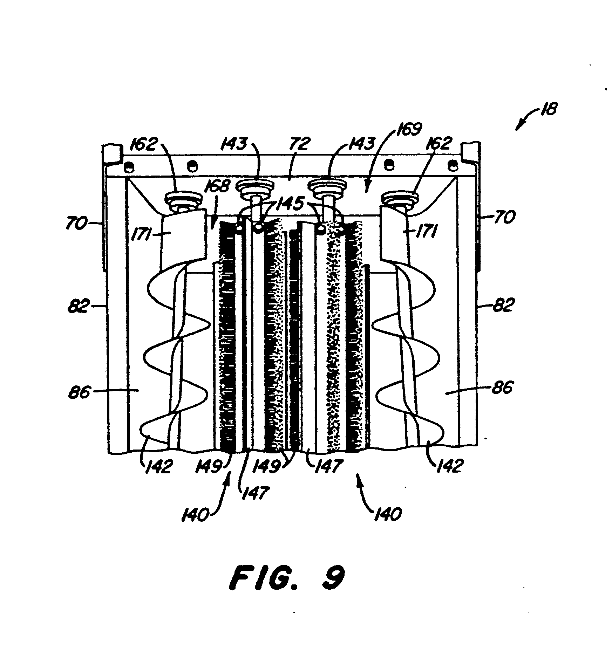

Wie am besten aus den Figuren 2 und 9 hervorgeht, ist eine bodenseitige Erntegut-Durchgangsöffnung 168 in dem rückwärtigen Abgabebereich 169 der Förderschnecken vorgesehen. Diese ist zwischen den Seitenwänden 70 der rückwärtigen Rahmenanordnung 62 und zwischen deren rückwärtiger Querwand 72 und dem rückwärtigen Ende des Fördertroges 86 bzw. der mit diesem verbundenen, quer verlaufenden Aussteifung 92 begrenzt. Die Nylonbürsten 149 und die Gummischürzen 147 der flexiblen Abstreifrolle 144 erstrecken sich bis in den Abgabebereich 169 oberhalb der Durchgangsöffnung 168. Die Förderschnecke 142 weist in ihrem rückwärtigen Bereich eine paddelförmige Ausbildung 171 auf, die im rückwärtigen Abgabebereich oberhalb der Durchgangsöffnung 168 wirksam ist, um das durch den Fördertrog 86 zugeförderte Erntegut direkt nach unten durch die Durchgangsöffnung 168 zu leiten.

Die gegensinnig rotierenden Bürstenrolleneinheiten 140 wischen das Erntegut, wie Baumwolle, von den Erntegutpflanzen ab, welche durch den Pflanzendurchgang 68 ausgerichtet werden, wenn sich die Erntemaschine über das Feld vorwärtsbewegt. Das abgestreifte Erntegut wird nach innen den Fördertrögen 86 zugeleitet und dort von den Förderschnecken 142 nach hinten in den Bereich der paddelförmigen Ausbildung 171 gefördert. Nach Durchtritt durch die Durchgangsöffnung 168 wird das Gut von einem Querförderer 170 erfaßt, der es zur Mitte des Erntekopfes zusammenführt, von wo ein Luftkanalsystem 25 das Erntegut aufnimmt und in einen Behälter 22 fördert.

In dem unteren Gehäuseteil 60 ist eine untere Sammelkammer 180 zwischen den Seitenwandteilen 80 und vor der Querwand 72 begrenzt. Diese Sammelkammer 180 öffnet sich nach oben und nach vorne und ist im wesentlichen frei von Einbauten oder Stützeinrichtungen.

Ferner ist ein abnehmbarer oberer Gehäuseteil 182 nach Fig. 6 vorgesehen, um jeweils die untere Sammelkammer 180 nach oben abzuschließen und zu verhindern, daß das Erntegut von den Bürstenrolleneinheiten 140 nach oben oder nach vorne aus der Reihenernteeinheit herausgeschleudert wird. Der obere Gehäusteil 182 besteht aus einer rechtsseitigen und einer linksseitigen, einzeln abnehmbaren Abdeckung 184 bzw. 186. Diese bestehen aus Blech und weisen äußere Seitenwände auf, welche im angebauten Zustand die entsprechenden Seitenwandteile 80 nach oben ergänzen. Jede äußere Seitenwand 188 der Abdeckungen endet an der unteren Kante in einen sich von vorne nach hinten erstreckenden Flansch 190 (Fig. 7). Dieser ist von einer rückwärtigen aufrechten Kante 192 bis zu einer vorderen aufrechten Kante 194 nach unten abgewinkelt. Eine im wesentlichen ebene horizontale Fläche 196 erstreckt sich nach innen,und zwar von der äußeren Seitenwand 188 aus. Die Fläche 196 endet in einem Flansch 188, der nach unten abgewinkelt ist. Eine aufrechte vordere Stirnwand 200 weist einen nach rückwärts gerichteten Seitenflansch 202 auf, der an der vorderen Kante 194 der äußeren Seitenwand 188 festgeschraubt ist. Die vordere Stirnwand 200 erstreckt sich von dem Flansch 190 bis zu der Oberfläche 196 und endet an einem inneren Flansch 204. Ein oberer Pflanzenzusammenführungsteil 206 ist an der rückwärtigen Außenkante 208 des Flansches 202 und an der vorderen Kante 194 festgeschraubt. Der Boden des oberen Pflanzenzusammenführungsteils 206 greift in den nach oben offenen unteren Pflanzenzusammenführungsteil 126 nach Fig. 6, so daß der Letztere um die Zapfen oder Stifte 128 schwenken kann. Die entgegengesetzte rückwärtige Kante 210 des oberen Zusammenführungsteils 206 ist an dem inneren Flansch 204 befestigt, und zwar zusammen mit einer aufrechten Reihe von sich horizontal erstreckenden Borsten 212, deren Enden sich nach innen und geringfügig nach rückwärts erstrecken. Eine weitere, sich von vorne nach hinten erstreckende Reihe von Borsten 214, deren Enden sich ebenfalls nach innen und geringfügig nach unten erstrecken, ist an dem Flansch 198 mittels Halterung 216 festgeklemmt, die ihrerseits an der Oberfläche 196 festgeshraubt ist.

Die vordere Stirnwand 200 der Abdeckung umfaßt einen nach unten und nach rückwärts ragenden Flansch 218 mit Öffnungen 220, die zur Aufnahme der Lagebestimmungsvorsprünge 124 dienen, welche den vorderen Bereich der Paneele 184 und 186 unterstützen, wobei die Seitenflansche 190 an dem nach unten und nach vorne geneigten Flansch 82 des Seitenwandteil 30 anliegen.

Weitere Lagebestimmungsvorsprünge 222 sind an der Oberseite des Winkeleisens 74 befestigt und greifen in Öffnungen. 224 in dem rückwärtigen Bereich der Oberfläche 196 ein.

Eine lösbare Verriegelungseinrichtung 230 nach Fig. 2, 7 und 8 ist an der Oberfläche 196 vorgesehen, um die Paneele 184 und 186 über dem unteren Gehäuseteil zu verriegeln, nachdem die Lagebestimmungsvorsprünge 124 bzw. 222 in Eingriff gelangt sind. Die Einrichtung um-faßt eine mit Öffnungen versehene Verstärkungsplatte 232 und ein geschlitztes Verriegelungsglied 234, das unter dem rückwärtigen Ende der Oberfläche 196 durch einen Befestigungsbolzen 236 und ein Abstandsglied 237 unterstützt wird. Ein Bolzen 238 erstreckt sich nach oben durch Schlitze 240 und 242 in der Verstärkungsplatte 232 und der Oberfläche 196. Eine Flügelmutter 244, die mit dem Bolzen 238 zusammenwirkt, dient zum Festziehen des Riegelgliedes 234 gegen den Boden eines Flansches 245, der sich oberhalb des Winkeleisens 74 nach vorne erstreckt. Wird die Flügelmutter 244 gelöst, kann das Riegelglied 234 über den Flansch 245 nach vorne geschoben werden, so daß das Paneel von den Lagebestimmungselementen 222 abgehoben werden kann. Danach kann die ganze Abdeckung nach rückwärts bewegt und außer Eingriff mit den Lagebestimmungsvorsprüngen 124 gebracht und abgenommen werden.

Im zusammengebauten Zustand von oberem und unterem Gehäuseteil bestimmen die inneren Kanten der Paneele 184 und 186 einen sich von vorne nach hinten erstreckenden, oberhalb des Pflanzendurchganges 68 liegenden Spalt 250, während die Innenkanten der oberen und unteren Pflanzenzusammenführungsteile 206 und 126 eine aufrechte vordere Eintrittsöffnung 252 am vorderen Ende des Pflanzendurchanges 68 begrenzen. Die beschriebenen Borstenreihen liegen mit ihren Enden dicht beieinander und verschließen den Spalt bzw. die Eintrittsöffnung. Durch die Neigung der Borsten können die Erntegutpflanzen leicht in die Sammelkammer eintreten, wobei in der Sammelkammer aufgewirbelte Baumwolle durch die Borsten zurückgehalten wird.

Der obere Spalt 250 und die diesem zugeordneten Borstenreihen 214 lassen eine Neigung der Oberfläche 196 der oberen Paneele nach vorne in Richtung auf das freie Ende der Reihenernteeinheit 18 zu, so daß deren vorderes Ende wesentlich niedriger als das rückwärtige Ende ausgebildet sein kann. Jede Pflanze, die höher ist als die vordere Eintrittsöffnung 252 wird durch den oberen Spalt und die diesem zugeordneten Borstenreihen in das Innere der Sammelkammer eingezogen. Die Borstenreihen der Eintrittsöffnung und die Borstenreihen des oberen Spaltes schließen dicht aneinander an, so daß man eine im wesentlichen geschlossene Sammelkammer erhält, die sich zwischen der rückwärtigen Querwand 72 und der vorderen Stirnwand 200 erstreckt und seitlich zwischen den Seitenwandteilen 80 begrenzt ist. die Neigung der Oberfläche 196 der Paneele erlaubt dem Fahrer der Erntemaschine eine gute Sicht.

Die die Abdeckungen 184, 186 bildenden Paneele bestehen aus Blech und haben ein geringes Gewicht und können unabhängig voneinander abgenommen und befestigt werden und sind daher leicht zu handhaben. Auf der anderen Seite erhöhen sie im Einbauzustand die Torsionsfestigkeit der unteren Stützeinrichtungen 64, 66. Eine begrenzte Flexibilität in vertikaler. Richtung der Stützeinrichtungen 64,66 verringern die Stoßempfindlichkeit der Reihenernteeinheit gegenüber Hindernissen oder unregelmäßigen Bodenkonturen. Diese Flexibilität ist jedoch so begrenzt, daß die Lage und Fluchtung der Bürstenrolleneinheit nicht verändert wird.

## Patentansprüche

1. Reihenernteeinheit, insb. für Baumwolle, zur - ggf. höheneinstellbaren - Anbringung an den Erntekopf einer Erntemaschine, bestehend aus einer rückwärtigen Rahmenanordnung (62) zur Anbringung an den Erntekopf, aus zwei von der Rahmenanordnung in Fahrtrichtung frei vorspringenden aufrechten Seitenwandteilen (80) zur Unterstützung von im gegenseitigen Abstand und unter Bildung eines in Fahrtrichtung und nach oben offenen Durchganges (68) für die in Reihen angeordneten Pflanzen angetriebenen Bürstenrolleneinheiten (140) und von jeweils in einem Fördertrog (86) seitlich nach außen gesehen hinter der zugeordneten Bürstenrolleneinheit liegenden Förderschnecken (142), welche das von den Bürstenrolleneinheiten abgestreifte Erntegut der Fahrtrichtung entgegen zu einem Abgabebereich in der Rahmenanordnung (62) fördern, dadurch gekennzeichnet, daß sie einen unteren Gehäuseteil (60) aus einer rechtsseitigen und einer linksseitigen unteren Stützeinrichtung (64,66) aufweist, welche jeweils aus dem aufrechten Seitenwandteil (80), einem mit diesem über die ganze Länge starr verbundenen, den Fördertrog enthaltenden kanalförmigen Versteifungsteil (84- 86) und einem zwischen Letzterem und dem Pflanzendurchgang (68) angeordneten, von der rückwärtigen Rahmenanordnung (62) in Fahrtrichtung frei vorspringenden unteren Bürstenstützprofil (90) bestehen,das wiederum mit dem kanalförmigen Versteifungsteil (84-86) über seine ganze Länge starr verbunden ist, und daß die Reihenernteeinheit einen abnehmbaren oberen Gehäuseteil (182) aufweist, der aus einer rechtsseitigen und einer linksseitigen einzeln abnehmbaren Abdeckung (184 bzw. 186) besteht, welche Abdeckungen jeweils eine den entsprechenden Seitenwandteil (80) nach oben ergänzende Seitenwand (188) und eine obere Deckenwand (196) aufweisen, wobei die beiden Deckenwände den Pflanzendurchgang (68) im Bereich der Gehäuseoberseite begrenzen.

2. Reihenernteeinheit nach Anspruch 1, dadurch gekennzeichnet, daß das in Fahrtrichtung weisende Ende jedes kanalförmigen Versteifungsteils (84 bis 88) mit dem freien Ende des unmittelbar benachbarten aufrechten Seitenwandteils (80) und mit dem freien Ende des unmittelbar benachbarten Bürstenstützprofils (90) durch eine die Lager für die Bürstenrolleneinheit (140) und die Förderschnecke (142) aufnehmende Stirnplatte (110) starr verbunden ist.

3. Reihenernteeinheit nach Anspruch 1 oder 2, dadurch gekennzeichnet, daß die rückwärtigen Enden der beiden kanalförmigen Versteifungsteile (84 bis 88) und der beiden Bürstenstützprofile (90) durch eine Queraussteifung (92) starr miteinander verbunden sind.

4. Reihenernteeinheit nach einem der Ansprüche 2 bis 3, dadurch gekennzeichnet, daß jedes Bürstenstützprofil (90) eine den Pflanzendurchgang (68) in dessen unterem Bereich begrenzende innere, aufrechte Seitenwand (98) und eine mit der inneren Kante (88) des kanalförmigenb Versteifungsteils (84 bis 88) über die Länge starr verbundene äußere Seitenwand (97) und einen die beiden Seitenwände (88,97) verbindenden, an die Bürstenrolleneinheit (140) ange-paßten oberen Verbindungssteg aufweist.

5. Reihenernteeinheit nach Anspruch 4, dadurch gekennzeichnet, daß die Rahmenanordnung (62) eine Querwand (72) zur Lagerung der Bürstenrolleneinheiten (140) und Förderschnecken (142) aufweist und einem einen Querförderer enthaltenden Hauptrahmen (16) zugeordnet ist, und daß die Rahmenanordnung (62) zwischen der Querwand (72) und der in Fahrtrichtung dazu im Abstand angeordneten Queraussteifung (92) eine bodenseitige Erntegutdurch gangsöffnung (168) zu dem unter der Rahmenanordnung (62) im Hauptrahmen (16) angeordneten Querförderer hin aufweist.

6. Reihenernteeinheit nach Anspruch 1, dadurch gekennzeichnet, daß jede Abdeckung (184,186) an ihrem freien vorderen Ende einen die Abdeckung in Fahrtrichtung gehäuseartig abschließendem, den Eintritt (252) in den Pflanzendurchgang (68) über dessen ganze Höhe begrenzenden Pflanzenzusammenführungsteil (206) trägt.

7. Reihenernteeinheit nach Anspruch 1 oder 6, dadurch gekennzeichnet, daß die beiden Abdeckungen (184 und 186) über in Höhe des Eintritts (252) und entlang der oberen, in der Arbeitsstellung der Reihenernteeinheit entgegen der Fahrtrichtung ansteigenden Begrenzung des Pflanzendurchgangs (68) aufeinander zu und sich quer durch den Pflanzendurchgang erstreckende Borstenreihen (212,214) aufweisen.

8. Reihenernteeinheit nach einem der Ansprüche 1 bis 7, dadurch gekennzeichnet, daß die Rahmenanordnung (62) im oberen Bereich der Querwand (72) auf einem in Fahrtrichtung vorspringenden Flansch (245) und die Stützeinrichtungen (64,66) an ihren freien Enden jeweils Elemente (222 bzw. 124) zur Lagebestimmung und Halterung der hinteren bzw. vorderen Enden der Abdeckungen (184,186) aufweisen.

**Claims**

1. A row-harvesting unit, especially for cotton, forpossibly height-adjustable - mounting on the harvesting head of a harvester, comprising a rear frame arrangement (62) for mounting on the harvesting head; two upright side wall parts (80) projecting freely from the frame arrangement in the direction of travel, which wall parts (80) support brush roller units (140) driven at a distance from each other and forming a passage (68) for the plants arranged in rows, which passage is open in the direction of travel and at the top, and screw conveyors (142) which, viewed laterally from the exterior, each lie in a conveyor trough (86) behind the respective brush roller unit, and which convey the harvested crop, stripped by the brush roller units, against the direction of travel to a delivery area in the frame (62), characterized in that it has a lower housing part (60) made up of right- and lefthand lower support arrangements (64,66), each of which comprises the upright side wall part (80), a channelshaped reinforcement part (84-86), connected rigidly to the side wall (80) along its whole length and containing the conveyor trough, and a lower brush support section (90) arranged hetween the conveyor trough and the plant passage (68) and projecting freely from the rear frame arrangement (62) in the direction of travel, which brush support section is in turn connected rigidly to the channel-shaped reinforcement part (84-86) along its whole length, and that the row-harvesting unit has a removable upper housing part (182), which comprises a cover (184 or 186), the left- and right-hand sides of which can be removed individually and which each have a side wall (188) which constitutes the top of the corresponding side wall part (80), and an overhead panel (196), the two overhead panels defining the boundary of the plant passage (68) in the area of the housing top.

2. A row-harvesting unit according to claim 1, characterized in that the end pointing in the direction of travel of each channel-shaped reinforcement part (84 to 88) is rigidly connected to the free end of the upright side wall part (80) immediately next to it and to the free end of the brush support section (90) immediately next to it by a front plate (110) which holds the bearings for the brush roller unit (140) and the screw conveyor (142).

3. A row-harvesting unit according to claim 1 or claim 2, characterized in that the rear ends of the two channelshaped reinforcement parts (84 to 88) and of the two brush support sections (901 are rigidly joined together by a transverse brace.(92).

4. A row-harvesting unit according to any one of claims 2 to 3, characterized in that each brush support section (90) has an inner, upright side wall (98) which defines the boundary of the lower section of the plant passage (68), and an outer side wall (97) which is connected rigidly over its whole length to the inner edge (88) of the channelshaped reinforcement part (84 to 88), and an upper connecting bar which connects the two side walls (88,97) and which is fitted to the brush roller unit (140).

5. A row-harvesting unit according to claim 4, characterized in that the frame arrangement (62) has a transverse wall (72) for the bearings of the brush roller units (140) and the screw conveyors (142) and is associated with a main frame (16) containing a transverse conveyor, and that the frame arrangement (62) has an opening (168) for the harvested crop to pass through to the transverse conveyor arranged under the frame arrangement (62) in the main frame (16), which opening (168) is situated on the under side of the frame arrangement (62) between the transverse wall (72) and the transverse reinforcement (92) which latter is arranged separated from the transverse wall in the direction of travel.

6. A row-harvesting unit according to claim 1, characterized in that each cover (184,186) carries at its free front end a part (206) which pushes the plants together, which part completes the cover in the direction of travel in the manner of a housing and which defines the boundary of the entrance (252) into the plant passage (68) over its whole height.

7. A row-harvesting unit according to claim 1 or claim 6, characterized in that the two covers (184 and 186) have rows of bristles (212,214) extending towards each other right across the plant passage, over the height of the entrance (252) and along the upper boundary of the plant passage (68), which boundary inclines against the direction of travel when the row-harvesting unit is in its operating position.

8. A row-harvesting unit according to any one of claims 1 to 7, characterized in that the frame arrangement (62) and the support arrangements (84,66) each have elements (222 or 124) for determining the position of and mounting the rear or front ends of the covers (184,186), the frame arrangement (62) having the elements in the upper area of the transverse wall (72) on a flange (245) projecting in the direction of travel, and the support arrangements (64,66) having the elements at their free ends.

**Revendications**

1.- Bec de récolte de rang, en particulier pour le coton, destiné à être adapté, éventuellement d'une manière réglable en hauteur, sur l'ensemble de récolte d'une machine de récolte, constitué par un système de châssis arrière (62) destiné à être raccordé à l'ensemble de récolte, deux parois latérales verticales (80) faisant saillie librement dans le sens de la marche à partir du système de châssis pour soutenir des rouleaux formant brosses (140) entraînés positivement, écartés l'un de l'autre et ménageant un passage (68) ouvert dans le sens de la marche et vers le haut pour les plants disposés en lignes ou rangées, ainsi que des vis transporteuses (142) disposées chaque fois dans une cuvette de transport (86) et placées latéralement vers l'extérieur et derrière le rouleau formant brosse conjugué, ces vis acheminant les produits de récolte séparés des plants par les rouleaux formant brosses pour les diriger, à l'opposé du sens de marche, vers une zone de déchargement prévue dans le système de châssis (62), caractérisé en ce qu'il comporte une partie de carter inférieure (60) constituée par des structures de support inférieures droite et gauche (64, 66) formées chaque fois par la paroi latérale verticale (80), une partie de raidissement en forme de gouttière (84 - 86) reliée rigidement à cette paroi sur toute sa longueur et ménageant la cuvette de transport et un profilé inférieur (90) de support des brosses disposé entre cette partie et le passage (68) destiné aux plants et s'étendant librement dans le sens de la marche depuis le système de châssis (62), ce profilé étant à son tour relié rigidement à la partie de raidissement en forme.de gouttière (84 - 86) sur toute sa longueur, et en ce que le bec de récolte de rang comporte une partie de carter supérieure amovible (182) qui est constituée par des capots droit et gauche (184 - 186) pouvant être déposés individuellement, ces capots comportant chaque fois une paroi latérale (188) complétant vers le haut la paroi latérale correspondante (80) et une paroi de recouvrement supérieure (196), les deux parois de recouvrement délimitant le passage (68) destiné aux plants au voisinage de la face supérieure du carter.

2.- Bec de récolte de rang suivant la revendication 1, caractérisé en ce que l'extrémité orientée dans le sens de la marche de chaque partie de raidissement en forme de gouttière (84 à 88) est reliée rigidement à l'extrémité libre de la paroi latérale verticale (80) immédiatement voisine et à l'extrémité libre du profilé de support de brosse (90) immédiatement voisin par une plaque d'extrémité (110) recevant les paliers destinés au rouleau formant brosse (140) et à la vis transporteuse (142).

3.- Bec de récolte de rang suivant la revendication 1 ou 2, caractérisé en ce que les extrémités arrière des deux parties de raidissement en forme de gouttières (84 à 88) et des deux profilés de support de brosse (90) sont reliées rigidement entre elles par une membrure de raidissement transversale (92).

4.- Bes de récolte de rang suivant l'une des revendications 2 et 3, caractérisé en ce que chaque profilé de support de brosse (90) comporte une paroi latérale verticale intérieure (98) limitant le passage (68) destiné aux plants dans sa zone inférieure et une paroi extérieure (97) reliée rigidement au bord intérieur (88) de la partie de raidissement en forme de gouttière (84 à 88) sur sa longueur, ainsi qu'une âme de liaison supérieure reliant les deux parois latérales (88, 97) et adaptée au rouleau formant brosse (140).

5.- Bec de récolte de rang suivant la revendication 4, caractérisé en ce que le système de châssis (62) comporte une paroi transversale (72) servant au montage à rotation des rouleaux formant brosses (140) et des vis transporteuses (142) et est associé à un châssis principal (16) contenant le transporteur transversal, et en ce que le système de châssis (62) comporte, entre la paroi transversale (72) et la membrure de raidissement (92) écartée de cette paroi dans le sens de la marche, un orifice (168) orienté vers le bas pour le passage des produits de récolte en direction du transporteur transversal disposé sous le système de châssis (62), dans le châssis principal (16).

6.- Bec de récolte de rang suivant la revendication 1, caractérisé en ce que chaque capot (184, 186) porte, à son extrémité avant libre un organe de convergence des plants (206) fermant le capotage à la manière d'un carter dans le sens de la marche et limitant l'entrée (252) dans le passage (68) destiné aux plants sur toute sa hauteur.

7.- Bec de récolte de rang suivant la revendication 1 ou 6, caractérisé en ce que les deux capots (184, 186) comportent des rangées de soies (212, 214) s'étendant sur la hauteur de l'entrée (252) et le long de la limite supérieure du passage (68) destiné aux plants, inclinée vers le haut à l'opposé du sens de marche dans la position de travail du bec de récolte de rang, ces soies étant orientées en direction l'une de l'autre et transversalement à travers le passage destiné aux plants.

8.- Bec de récolte de rang suivant l'une quelconque des revendications 1 à 7, caractérisé en ce que le système de châssis (62) comporte dans la partie superieure de la paroi transversale (72), sur une bride faisant saillie dans le sens de la marche, et les structures de support (64, 66) comportent à leurs extrémités libres, chaque fois des éléments (222, 124) assurant le positionnement et le maintien des extrémités avant et arrière des capots (184, 186).

FIG. 1

FIG. 8

FIG. 2

FIG. 3

**FIG. 4**

FIG. 7

FIG. 5

FIG. 6

**FIG. 9**